# EUROPÄISCHE PATENTSCHRIFT

(11) **EP 1 490 197 B1**
(45) Veröffentlichungstag und Bekanntmachung des Hinweises auf die Patenterteilung: **17.09.2008**
(21) Anmeldenummer: 03712125.8
(22) Anmeldetag: 02.04.2003
(51) Int. Cl.: B23Q 1/00, B23Q 11/10, B23B 41/02, B23B 51/02

(54) **BOHREINRICHTUNG MIT EINEM MEHRSCHNEIDIGEN BOHRWERKZEUG, INSBESONDERE TIEFBOHRWERKZEUG**
DRILLING DEVICE PROVIDED WITH A MULTI-BLADED DRILLING TOOL, ESPECIALLY A DEEP DRILLING TOOL
DISPOSITIF DE PERCAGE EQUIPE D'UN OUTIL DE PERCAGE A PLUSIEURS TRANCHANTS, EN PARTICULIER UN OUTIL DE PERCAGE PROFOND

(30) Priorität: 03.04.2002 DE 20205861 U
(43) Veröffentlichungstag der Anmeldung: 29.12.2004
(73) Patentinhaber: TBT Tiefbohrtechnik GmbH, 72581 Dettingen/Erms (DE)
(72) Erfinder: TOPF, Ernst, 72644 Oberboihingen (DE)
(74) Vertreter: Patentanwälte Ruff, Wilhelm, Beier, Dauster & Partner
(86) Internationale Anmeldenummer: PCT/EP2003/003411
(87) Internationale Veröffentlichungsnummer: WO 2003/082515

(56) Entgegenhaltungen:
- DE-A- 2 946 103
- US-A- 5 829 926
- US-A- 2001 033 780
- US-B1- 6 315 504
- PATENT ABSTRACTS OF JAPAN vol. 2000, no. 02, 29. Februar 2000 (2000-02-29) & JP 11 320213 A (NISSAN MOTOR CO LTD), 24. November 1999 (1999-11-24)

## Beschreibung

### Anwendungsgebiet und Stand der Technik

Die Erfindung betrifft eine Bohreinrichtung mit einem mehrschneidigen Bohrwerkzeug, insbesondere einem Tiefbohrwerkzeug, mit wenigstens zwei Zuleitungskanälen, über die der Schneidzone Kühl-Schmierstoff zugeleitet wird, gemäß dem Oberbegriff des Anspruchs 1. Eine solche Bohreinrichtung ist aus der US-A-5,829,926 bekannt.

Neben vielfach verwendeten Einlippen-Tiefbohrwerkzeugen sind auch mehrschneidige Tiefbohrwerkzeuge und andere Bohrwerkzeuge, wie beispielsweise Spiralbohrer, im Einsatz. Bei Hochleistungsbohrern, insbesondere bei Tiefbohrwerkzeugen, wird der Schneidzone über den Bohrer längs durchdringende Kanäle Kühl-Schmierstoff zugeleitet, das die Aufgabe hat, die Schneidzone zu kühlen, Führungsabschnitte des Bohrers in der Bohrung zu schmieren und vor allem die beim Bohren entstehenden Späne abzuführen. Dazu sind Span-Ableitungskanäle im Bohrer vorgesehen, beispielsweise in Form einer axial verlaufenden Ausnehmung (vorwiegend bei Tiefbohrern) oder als schraubenförmige Kanäle bei sog. Spiralbohrern.

Während bei Einlippen-Bohrern, die nur eine Schneide aufweisen, der vor der Schneide gebildete Spanraum und dementsprechend auch die Ableitungskanäle relativ groß sind, sind bei mehrschneidigen Bohrern in ihrem Querschnitt begrenzt. Bei langspanenden Werkstoffen, also z.B. bei Stahl im Gegensatz zu Aluminium oder Gussmaterial, führen die sich bildenden langen schraubenförmigen Späne leicht zu Verstopfungen der Span-Ableitungskanäle.

Die JP 11 320 213 A (Patent Abtracts of Japan Bd. 2000, Nr. 2) beschreibt einen Drehmeißel mit einem Schaft und einer daran angebrachten Schneidplatte. Im Schaft sind zwei Bohrungen vorgesehen, die im Bereich des Schneidplättchens enden. Durch eine der Bohrungen soll Kühlluft und durch die andere Schmieröl zugeleitet werden.

Die US 5 829 926 beschreibt einen Spiralbohrer mit einer internen Flüssigkeitskühlung. Dazu sind im Schaft jeweils zwei Bohrungen für die Zu- und Rückleitung von Kühlflüssigkeit vorgesehen. Durch eine aufgelötete oder geklebte Kappe im Bereich der Bohrer-Stirnfläche wird die Kühlflüssigkeit in ihrer Strömungsrichtung umgekehrt und daran gehindert, in die Schneidzone zu gelangen. Die Kühlflüssigkeit dient also nur der Kühlung und weder der Schmierung noch der Späneabfuhr aus der Schneidzone.

### Aufgabe und Lösung

Es ist eine Aufgabe der vorliegenden Erfindung, die Versorgung der Schneidzone bei Bohreinrichtungen der eingangs erwähnten Art, also mehrschneidigen Bohrwerkzeugen, auch im Falle von verstopfungsträchtigen Werkstoffen sicherzustellen.

Eine erfindungsgemäße Lösung dieser Aufgabe besteht darin, dass den Kanälen voneinander unabhängige Kühl-Schmierstoff-Versorgungseinrichtungen zugeordnet sind. Diese sollten vorzugsweise zur Aufrechterhaltung vorgegebener gesonderter Volumenströme des Kühl-Schmierstoffs für die einzelnen Kanäle ausgebildet sein.

Es wird davon ausgegangen, dass jeder Schneide ein Zuleitungskanal für den Kühl-Schmierstoff zugeordnet ist. Dieser mündet normalerweise in der Bohrerstirnfläche anschließend an die vorauslaufende Schneide und versorgt den in Drehrichtung dahinter liegenden Spanraum der folgenden Schneide. Diese erzeugt die Späne, die in den Spanraum und den daran anschließenden Span-Ableitungskanälen durch die Bohrung abgeführt werden. Wenn nun in einem der Spanräume und den zugehörigen Ableitungskanälen durch lange Späne oder insbesondere sich bildende Spanknäuel eine Verstopfung eintritt, dann ist durch die unabhängige Versorgung des zugehörigen Zuleitungskanals mit Schmierstoff sichergestellt, dass dieser Schneide und ihrem Spanraum und dem angeschlossenen Span-Ableitungskanal weiterhin Schmierstoff zugeführt wird. Wären alle Zuleitungskanäle an die gleiche Kühl-Schmierstoff-Versorgungseinrichtung angeschlossen, also beispielsweise eine gemeinsame Pumpe oder Druckleitung, dann würde sich im Falle einer Verstopfung der Kühl-Schmierstoffdruck nur unwesentlich erhöhen und aus dem zu dem nicht verstopften Kanalsystem gehörende Zuleitungskanal eine entsprechend höhere Menge fließen. Damit könnte die Verstopfung nicht gelöst werden und die zugehörige Schneide würde eine zu geringe Menge an Kühl-Schmierstoff erhalten. Dies kann zu einem Fressen und einer Beschädigung oder Zerstörung des gesamten Bohrers und des Werkstückes führen. Auch kann die Verstopfung in den ja nach außen hin offenen Ableitungskanälen die Bohrungswand beschädigen.

Vorteilhaft sind die Versorgungseinrichtungen bei der Erfindung zur Erhöhung des Kühl-Schmierstoffdrucks bei durch Verstopfung in einem der Kanäle bedingter Verringerung des Volumenstroms in diesem Kanal ausgebildet. Der Druck erhöht sich also entsprechend der Auslegung der Versorgungseinrichtung in diesem Falle so weit, bis die Verstopfung beseitigt ist.

Dies kann dadurch bewirkt werden, dass an die Kanäle jeweils eigene Pumpen bzw. bei Pumpen mit mehreren Kammern eigene Pumpenkammern angeschlossen sind. Es ist aber auch möglich, die Kanäle an Ausgänge eines Mengenteilers anzuschließen. Ein solcher Mengenteiler arbeitet beispielsweise nach Art einer Zahnradpumpe mit mehreren Kammern, die durch das zugeleitete Medium angetrieben werden und an ihren einzelnen Ausgängen jeweils vorgegebene, beispielsweise gleiche Volumenströme ausgibt. Diese sind im wesentlichen unabhängig von den in den einzelnen Ausgangsleitungen herrschenden Drücken, wenn man von Spaltverlusten in dem Mengenteiler-Mechanismus etc. absieht. Dadurch ist es möglich, auch bei einer Bohreinrichtung mit nur einer Zentralversorgung für Kühl-Schmierstoff die Erfindung zu verwirklichen. Der Mengenteiler kann, ebenso wie die gesonderten Zuleitungen zu den Kanälen, in einem Adapter vorgesehen sein, der an eine Bohrspindel angeschlossen ist und z.B. das Spannfutter für den Bohrer enthält. Es ist aber auch möglich, das vorher beschriebene Verhalten des Kühl-Schmierstoffdrucks und -volumenstroms in den einzelnen Kanälen durch entsprechende Volumen/Druckregelung herbeizuführen oder gegenüber dem natürlichen Druckanstieg bei Verringerung des Volumenstroms zu verändern, beispielsweise zu überhöhen. Es ist auch möglich, in diesem Fall bestimmte Druckimpulse oder -stöße zu erzeugen, die zu einer Lösung von Verstopfungen beitragen. Dies könnte durch Anordnung von Druck- und/oder Mengensensoren in den unabhängigen Zuleitungssystemen über ein elektronisches oder hydraulisches Steuergerät erfolgen, das auf Pumpen und/oder Ventile wirkt.

Die Einleitung des Kühl-Schmierstoffs in die einzelnen Kanäle in voneinander unabhängiger Weise kann auf verschiedene Art erfolgen. Voraussetzung dafür ist, dass in dem Werkzeug getrennte Zuleitungskanäle vorgesehen sind. Diese können axiale, radiale oder axiale und radiale Eingänge in dem von der Bohrerspitze entfernten Bereich haben, die meist über Drehdurchführungen mit umlaufenden Ringnuten versorgt werden. Diese wiederum können in dem vorher beschriebenen Adapter oder der Bohrspindel integriert oder an diese angeschlossen sein.

Erfindungsgemäß wird ferner eine Bohreinrichtung vorgeschlagen, bei der die Spanräume, die in der Arbeitsdrehrichtung eines mehrschneidigen Bohrwerkzeuges vor den Schneiden gebildet sind und die mit den Span-Ableitungskanälen verbunden sind, eine an die Schneide anschließende gerundete Seitenwand aufweisen. Üblicherweise sind die Spanräume in den Schneidköpfen von Bohrwerkzeugen kreissegmentförmig im Querschnitt. Das gilt auch für Spiralbohrer, bei denen zwar durch die Schraubenform des Spanraums bzw. der Ableitungskanäle eine Rundung vorhanden ist, die dennoch einen im wesentlichen kreissegmentförmigen Querschnitt (Tortenstück) haben. Die sich dabei bildende winklige Ecke nahe des Bohrerzentrums und auch die zwischen der Bohrungswand und der Spanraumbegrenzung entstehenden Ecken bilden Angriffspunkte, an denen Späne hängen bleiben und sich verhaken können, so dass sie Ausgangspunkte für Verstopfungen bilden.

Durch die abgerundete Seitenwand wird nicht nur ein relativ großer Spanraum geschaffen, insbesondere, wenn er bis an die zur Schneide senkrechte Mittelebene des Bohrers reicht, sondern es werden diese beschriebenen scharfen Ecken vermieden. Vielmehr werden Spanleitflächen geschaffen, an denen die Späne abgleiten und sich beispielsweise schraubenförmig durch die Ableitungskanäle, die vorzugsweise die gleiche Form mit abgerundeten Seitenwänden haben, nach außen "schrauben".

Außerdem wird dadurch, dass bei dieser Ausführung ein in Umfangsrichtung in den Spanraum ragender Vorsprung geschaffen wird, trotz eines großen Spanraums eine Fläche geschaffen, die als Führungszone für den Bohrer dient und beispielsweise gegenüber dem übrigen Bohrerumfang im Durchmesser etwas vergrößert ist und somit die Aufgabe einer Führungsleiste übernimmt. Sie fängt, insbesondere bei einer unsymmetrischen Schneiden-Anordnung, Reaktionsdrücke auf und sorgt für eine genaue Führung des Bohrers in der bereits entstandenen Bohrung, was das axialgenaue Bohren, insbesondere bei Tiefbohrern, möglich macht.

Eine weitere erfindungsgemäße Maßnahme zur Vermeidung von Verstopfungen und Ableitungsproblemen von entstehenden langen Spänen wird durch die Erfindung dadurch vorgeschlagen, dass einem mehrschneidigen Bohrwerkzeug wenigstens eine der Schneiden, in axialer Draufsicht auf das Bohrerende gesehen, einen Knick aufweist, in dem sich zwei Schneidenabschnitte unter einem Winkel treffen, vorzugsweise unter einem Winkel zwischen 170° und 120°. Dies kann beispielsweise dadurch geschehen, dass, in einigem Abstand vom Bohrerzentrum, die Schneide in Drehrichtung abknickt oder auch mit einem Radius in eine neue Ausrichtung übergeht. Der Spanraum wird dadurch nochmals vergrößert. Die geknickte Schneide sorgt aber dafür, dass die Späne leichter brechen und nicht als ein relativ breites gewendeltes Band anfallen, das sich in den Ableitungskanälen festsetzen kann. Es werden vielmehr zwei dicht nebeneinander liegende schmalere Spanstreifen gebildet, die an sich in der Mitte noch zusammenhängen müssten, aber durch die unterschiedlichen Entstehungsverhältnisse den Span längs und auch in Querrichtung zerreißen, so dass ein Spanbild entsteht, das einem kurzspanigen Werkstoff entspricht. Diese Maßnahme kann bei einem zweischneidigen Bohrer z.B. an beiden Schneiden vorgesehen sein, so dass der Bohrer wieder ein symmetrisches Schnittbild hat, es kann aber vorteilhaft auch nur an einer Schneide vorgesehen sein. In diesem Falle wird durch die unterschiedliche Schnittgeometrie bewusst eine Querkraft am Bohrkopf erzeugt, die für ein eindeutiges Anliegen eine der Führungszonen an die Bohrungswand drückt und somit allen Führungsproblemen durch wechselseitiges Anliegen des Bohrers vorbeugt. Es wird also damit eine bewusste Asymmetrie der Schneiden geschaffen.

Die Erfindung ist besonders vorteilhaft beim Tiefbohren, ergibt aber auch bei anderen Bohrbearbeitungen Vorteile, z.B. bei Kühlkanal-Spiralbohrern und -senkern. Sie ist auch sinnvoll bei Doppel- und Mehrfachzuführung von Kühl-Schmierstoff zu einer Schneide.

### Kurzbeschreibung der Zeichnungen

Ausführungsbeispiele der Erfindung sind in den Zeichnungen dargestellt und werden im Folgenden näher erläutert. In den Zeichnungen zeigen
- Fig. 1 bis 4: schematische Seitenansichten einer Bohreinrichtung mit unterschiedlichen Wegen für die Kühl-Schmierstoff-Zuführung,
- Fig. 5: einen schematischen Längsschnitt durch ein Tiefbohrwerkzeug,
- Fig. 6: einen Querschnitt nach der Linie VI-VI in Fig. 5,
- Fig. 7 und 8: Details von anderen Ausführungsformen eines Bohrers nach Fig. 5 mit unterschiedlichen Kühl-Schmierstoff-Zuführungen,
- Fig. 9: einen Adapter mit einer Drehdurchführung für den Schmierstoff,
- Fig. 10: einen Adapter mit einem Mengenteiler für Kühl-Schmierstoff,
- Fig. 11: eine Stirnansicht auf die Arbeitsseite eines Tiefbohrwerkzeugs,
- Fig. 12: einen Schnitt durch das zugehörige, den Bohrerschaft bildende Rohrstück,
- Fig. 13, 14 und 15: Darstellungen entsprechend Fig. 11 von unterschiedlich gestalteten Bohrern und
- Fig. 16: eine Ansicht des Bohrers in Richtung des Pfeils XVI.

### Bevorzugte Ausführungsbeispiele

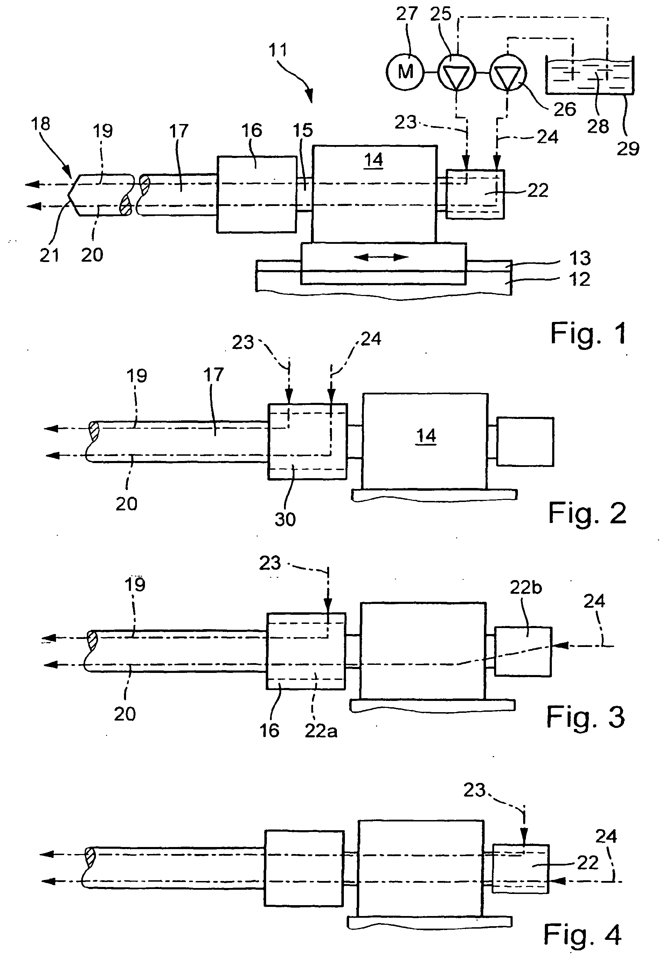

Fig. 1 zeigt eine Bohreinrichtung 11 mit einem Maschinengestell 12, an dem auf einem Schlitten 13 ein Spindelkasten 14 horizontal verschiebbar und entsprechend einem Bohrungsfortschritt zustellbar geführt ist. In dem Spindelkasten 14 ist eine Bohrspindel 15 drehbar und antreibbar gelagert. An einer Seite der Bohrspindel ist in einem Spannfutter 16 ein Bohrwerkzeug 17, z.B. ein Tiefbohrwerkzeug, eingespannt. Dieses hat, wie später noch erläutert wird, zwei längs bis zu seiner Schneidzone 18 am freien Ende verlaufende Kühl-Schmierstoff-Zuleitungskanäle 19, 20, die in der die Schneidzone bildenden Stirnfläche 21 des Bohrwerkzeugs münden.

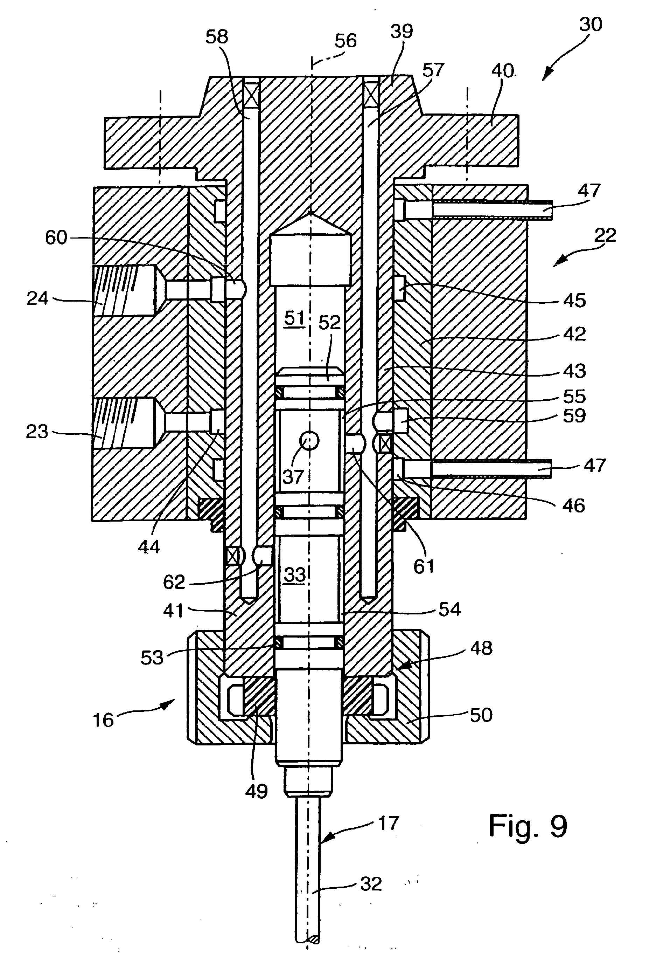

An dem Bohrwerkzeug entgegengesetzten Ende der Bohrspindel 15 ist eine Drehdurchführung 22 angeordnet, die Kühl-Schmierstoff für die Bohrung über zwei voneinander getrennte Zuleitungen 23, 24 erhält. Diese werden von zwei gesonderten Pumpen 25, 26 bzw. aus zwei Pumpenkammern der gleichen Pumpe versorgt, die von einem gemeinsamen Motor 27 angetrieben sein können. Sie ziehen den Kühl-Schmierstoff 28 aus einem Vorratsbehälter 29. In den Drehdurchführungen wird in einer Weise, die nachfolgend noch anhand von Fig. 9 beschrieben wird, der aus den Zuleitungen 23, 24, die maschinenfest sind, kommender Kühl-Schmierstoff in Axialkanäle in der drehbaren Bohrspindel eingeleitet und von dieser in das im Spannfutter 16 eingespannte Bohrwerkzeug so geleitet, dass jeder der Kanäle 19, 20 den Kühl-Schmierstoff, bis auf Übleitungs-Leckverluste, nur aus jeweils einer der Zuleitungen 23, 24 erhält.

Fig. 1 zeigt, dass die Zuleitungen 23, 24 radial in die Drehdurchführung 22 münden. Dort wird der Leitungsverlauf in eine axiale Führung innerhalb der Bohrspindel umgesetzt, von wo sie in ebenfalls axiale Kanäle im Bohrwerkzeug geleitet werden.

Fig. 2 zeigt eine Ausführung einer im Prinzip Fig. 1 entsprechenden Bohreinrichtung 11, bei der die Zuleitungen 23, 24 an einen Adapter 30 angeschlossen sind, wie er in Fig. 9 dargestellt ist. Entfällt eine Drehdurchführung, die den Kühl-Schmierstoff von den drehfesten, jedoch axial mit dem Spindelkasten 14 verschiebbaren Zuleitungen auf ein mit der Bohrspindel und dem Bohrwerkzeug drehbaren Innenteil umsetzt, von wo die Einleitung in die Kanäle 19, 20 des Bohrwerkzeugs 17 erfolgt.

Fig. 3 zeigt eine Ausführung, bei der die Zuleitung zu dem Kanal 19 über eine Drehdurchführung 22a an dem Spannfutter 16 bzw. einem Adapterteil erfolgt. Die Einleitung erfolgt radial.

Der Kanal 20 wird über eine Drehdurchführung 22b versorgt, die, ähnlich wie in Fig. 1, am Spindelende vorgesehen ist. In diese erfolgt die Einleitung des Schmierstoffes über eine axiale Einleitung 24. Diese Ausführung kann dann vorteilhaft sein, wenn in einer Bohreinrichtung bereits eine Kühl-Schmierstoff-Führung für nur einen Kanal vorgesehen ist und zur Anwendung der Erfindung eine zweite unabhängige Zuleitung hinzugefügt wird.

Fig. 4 zeigt schematisch eine Ausführung, bei der, ähnlich wie in Fig. 1, die Zuleitungen an eine am Bohrungsspindelende angeordnete Drehdurchführung angeschlossen sind, jedoch mit einer Zuleitung 23 mit axialer und einer Zuleitung 24 mit radialer Einmündung in diese.

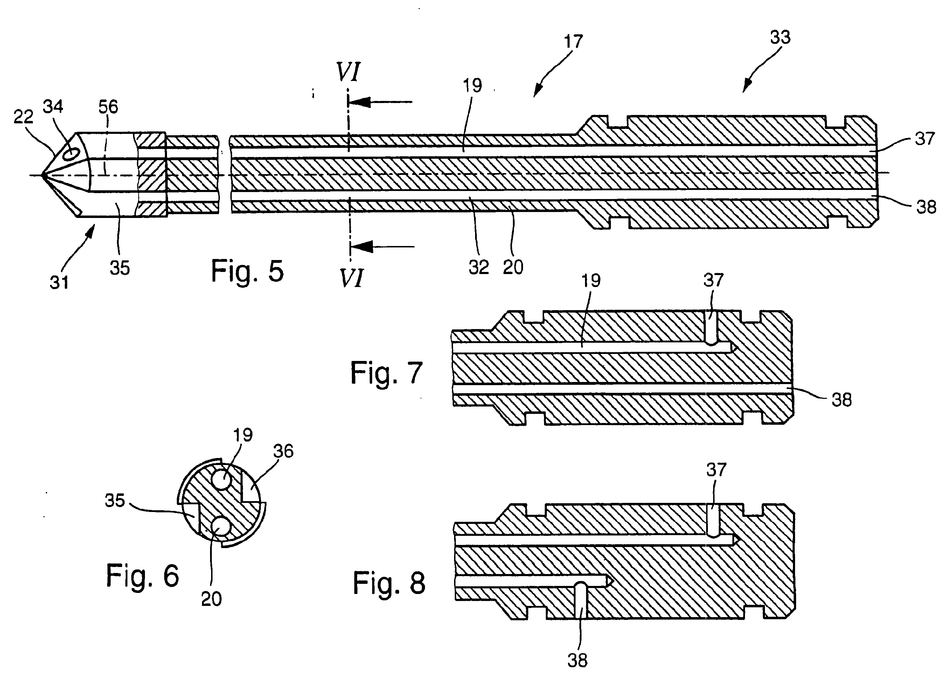

Fig. 5 zeigt einen Schnitt durch ein Tiefbohrwerkzeug 17. Es enthält einen Schneidkopf 31, der meist aus einem Hartwerkstoff besteht und, z.B. durch Löten, an einem langgestreckten, auch als Rohr bezeichneten Schaft 32 angebracht ist. Dieser wiederum ist einstückig oder verbunden mit einem Einspannkopf 33, der in einem Einspannfutter an der Bohrspindel eingespannt werden kann. Schneidkopf, Schaft und Einspannkopf 33 enthalten beim dargestellten Beispiel 2 Kanäle 19, 20, die als durchgehende, insbesondere zueinander fluchtende achsparallele Bohrungen durch das ganze Werkzeug hindurchgehen und ihre Mündungen 34 in der Stirnfläche 22 des Schneidkopfes haben. In dem Schneidkopf und dem Schaft sind zwei Span-Ableitungskanäle 35, 36 (s. Fig. 6) ausgebildet, die als segmentartige Ausschnitte in dem im übrigen kreiszylindrischen Querschnitt von Schaft und Schneidkopf ausgebildet sind. Fig. 1 und 6 zeigen eine Schaftausführung aus Vollmaterial. Bei der Ausführung nach Fig. 5 werden die den Zuleitungskanälen zugeordneten Kanäle unabhängig voneinander durch die Bohrspindel geführt (Kühlmittel-Einspeisung gemäß Fig. 1 bzw. 4).

Beim Ausführungsbeispiel nach Fig. 5 erfolgt der Anschluss der Kanäle 19, 20 im Bohrwerkzeug 17 axial, d.h., dass die entsprechenden Kanäle in der Bohrspindel oder im Einspannkopf in einer axialen Stirnfläche enden und dort die Kanäle umgebende Ringdichtungen vorgesehen sind. Es könnte sich dabei um eine Bohreinrichtung in den Figuren 1 oder 4 handeln. Statt der stirnseitigen Einlässe 37, 38 nach Fig. 5 hat die Ausführung nach Fig. 7 einen stirnseitigen Einlass 38 und einen radialen Einlass 37, der durch eine Verbindungsbohrung zu dem sacklochartigen Kanal 19 gebildet ist. Diese Ausführung würde sich für eine Bohreinrichtung nach Fig. 3 eignen.

Fig. 8 zeigt ein Beispiel, bei dem zwei radiale Einlässe 37, 38 in axialem Abstand voneinander vorgesehen sind. Sie werden über entsprechende Ringkanäle im Adapter oder Einspannkopf versorgt.

Fig. 9 zeigt einen Adapter 30, der eine Drehdurchführung 22 enthält. Der Adapter hat einen Grundkörper 39, der über einen Flansch 40 und durch ihre Mittellinien symbolisierte Schrauben mit der drehbaren Bohrspindel zu verbinden ist. Auf seinem zylindrischen Abschnitt 41 ist die Drehdurchführung 22 angeordnet, und zwar in Form eines den zylindrischen Abschnitt 41 umgebenden Ringes 42, der an seiner Innenfläche 43 zwei in axialem Abstand voneinander angeordnete Ringnuten 44, 45 aufweist. Diese sind mit den Anschlüssen 23, 24 für Kühl-Schmierstoff über radiale Bohrungen verbunden. Der Ring 42 ist auf dem zylindrischen Abschnitt 41 des Grundkörpers 39 drehbar, jedoch so angeordnet oder durch nicht dargestellte Dichtringe so abgedichtet, dass zwischen Kühl-Schmierstoff-Strömen aus den Zuleitungen 23 und 24 keine wesentliche Verbindung besteht.

An beiden Enden des Ringes 42 sind weitere Ringnuten 46 vorgesehen, die zur Abführung von eventuellem Lecköl dienen und dazu an entsprechende Leckölableitungen 47 angeschlossen sind.

In dem Grundkörper 39 ist eine zentrale Innenbohrung vorgesehen, die vom bohrwerkzeugseitigen Ende 48 bis über die Ringnut 45 hinaus reicht und die zur Aufnahme des Einspannkopfes 33 des Bohrwerkzeugs 17 dient. Dieses ist über eine Spannmutter 49 mit zugehöriger Überwurfmutter 50 an dem Adapter befestigt, die damit das Spannfutter 16 bilden. Im Inneren der Bohrung 51 führt sich der Einspannkopf 33 über drei doppelte Ringstege 52, die zwischen sich jeweils eine Nut einschließen, in der ein Rundschnurdichtring 53 (O-Ring) liegt und damit zwei gegeneinander abgedichtete Ringkammern 54, 55 abgrenzt. Im Bereich dieser von den Ringkammern abgegrenzten Abschnitten münden die Einlässe 37 des Werkzeugs, was bezüglich der Einlassgestaltung dem nach Fig. 8 ähnelt.

In der rohrförmigen Wandung des Grundkörpers 39 sind, parallel zur System-Mittelachse 56, Bohrungen 57, 58 vorgesehen, von denen Querbohrungen 59, 60 zu den Ringnuten 44, 45 reichen. Damit sind sie, jeweils unabhängig voneinander, an die Zuleitungen 23, 24 angeschlossen und, über weitere Querbohrungen 61, 63, mit den Ringkammern 54, 55. Von dort kann das Kühl-Schmierstoff über die Einlässe 37 im Abschnitt 55 und 38 im Abschnitt 54 in die Kanäle 19, 20 in Bohrer (s. Fig. 8) strömen. Die Längs- und Querkanäle sind zum Teil als durchgebohrte Kanäle mit Abschluss-Stücken ausgeführt. Es ist also zu erkennen, dass der Adapter auf die Spindel, z.B. einer Tiefbohrmaschine, gesetzt werden kann und einerseits das Spannfutter und andererseits die Drehdurchführung für eine unabhängige Doppelführung des Kühl-Schmierstoffes enthält.

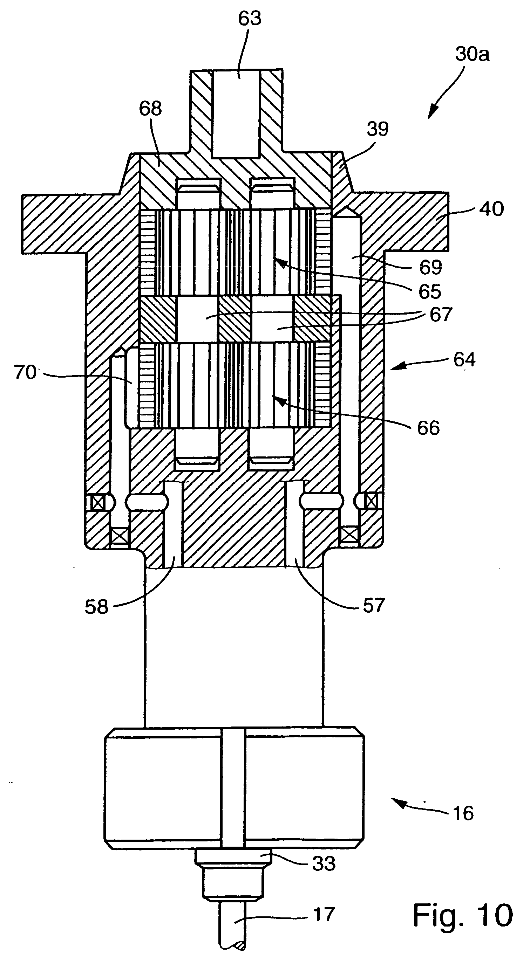

Während Fig. 9 bezüglich Volumen und Druck des Kühl-Schmierstoffs voneinander unabhängig versorgte oder geregelte Zuleitungen 23, 24 benötigt, kann der Adapter 30a nach Fig. 10 an eine Bohreinrichtung angeschlossen werden, die nur eine gemeinsame Zuleitung 63 für das Kühl-Schmierstoff aufweist. Dieser wird bei der dargestellten Ausführung durch die Bohrspindel zugeführt, an die der Adapter über den Flansch 40 an seinem Grundkörper 39 angeschlossen ist.

In den Adapter 30a ist ein Mengenteiler 64 integriert. Er ist in den Grundkörper 39 direkt eingebaut und nach Art einer doppelten Zahradpumpe ausgebildet. Er besteht dementsprechend aus zwei doppelten Zahnradpaaren 65, 66, deren Zahnräder im Abstand voneinander je auf einer Welle 67 angeordnet sind, die im Grundkörper 39 bzw. einem die Pumpe verschließenden Deckel 68, der auch die Zuleitung 33 trägt, drehbar gelagert sind. Jeweils eine Seite der ineinander kämmenden Zahnradpaare ist an die Zuleitung 63 angeschlossen, während die andere Seite an zwei voneinander unabhängige Kammern 69, 70 angeschlossen ist, die über ein System von Längs- und Querbohrungen an die Längsbohrungen 57, 58 angeschlossen sind, die in Ausbildung und Funktion denen nach Fig. 9 entsprechen können. Auch der Anschluss des Bohrwerkzeuges 17 in dem übrigen Teil des Adapters kann dem nach Fig. 9 entsprechen.

Der Mengenteiler erhält also aus der gemeinsamen Zuleitung 63 unter Druck stehendes Kühl-Schmierstoff. Dieses gelangt in die Antriebskammern des Mengenteiles 64, d.h. die beiden eingangsseitigen Kammern der doppelten Zahnradpumpe 65, 66. Dadurch wird der Mengenteiler angetrieben, d.h. die beiden Zahnradpaare drehen sich, abgedichtet ineinander kämmend mit den Wellen 67 gegenläufig und fördern dabei das Kühl-Schmierstoff auf die Auslass-Seite, d.h. in die Kammern 69, 70. Wegen der mechanischen Kopplung der beiden Zahnradpaare durch die Wellen 67 wird in beide Kammern 69, 70 jeweils die gleiche Menge des Kühl-Schmierstoffes gefördert, wiederum abgesehen von Leckmengen. Trotz einer gemeinsamen Zuleitung sind also die beiden Ausgänge in die Längsbohrungen 57, 58 druckmäßig voneinander entkoppelt, jedoch mengenmäßig aneinander gekoppelt. Über die gleiche Mengenteilerstruktur lassen sich beliebig viele Teilmengen voneinander absondern und, falls dies nötig wäre, auch in ihrem Volumen in ein bestimmtes Verhältnis setzen, was nicht immer 1 : 1 sein muss.

Es sind auch andere Mengenteiler-Bauarten möglich, beispielsweise nach dem Prinzip von Kolbenzellenpumpen. Da diese Mengenteiler unkompliziert und sehr kompakt zu bauen ist, eignet er sich besonders zur Anbringung in einem Adapter. Er könnte jedoch auch außerhalb der Spindelanordnung oder Bohreinrichtung vorgesehen werden. Der Vorteil ist bei der dargestellten Anordnung, dass nur eine Drehdurchführung für einen einzigen Kühl-Schmiermittelstrang nötig ist.

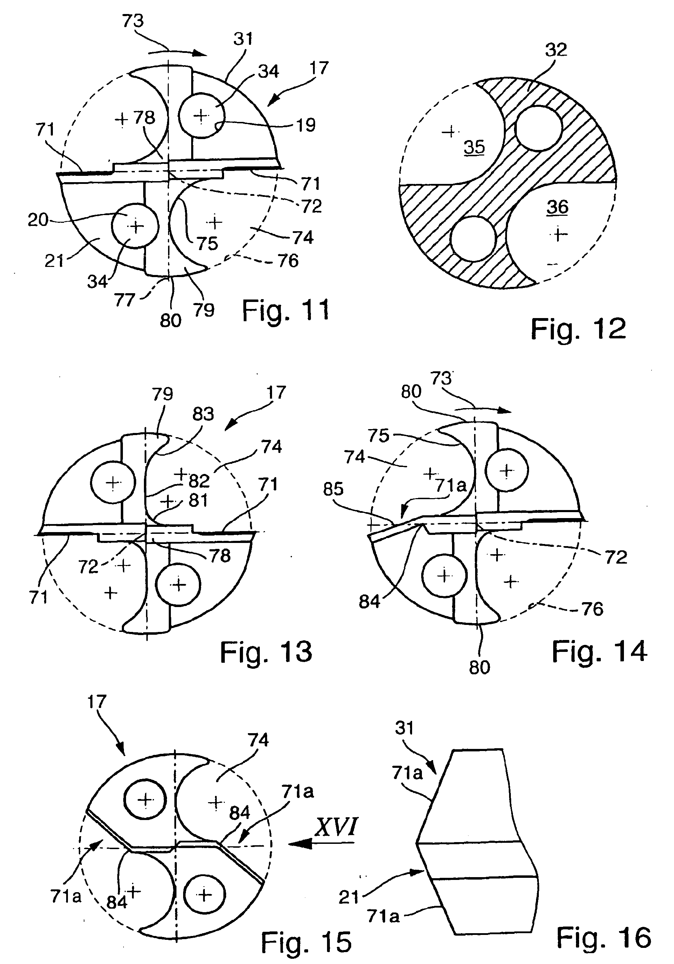

Fig. 11 zeigt eine Draufsicht auf die Stirnfläche 21 eines Tiefbohrwerkzeugs 17 oder, genauer, auf den Hartstoff-Schneidkopf 31 (s. auch Fig. 5). Es sind zwei Schneiden 71 vorgesehen, die sich symmetrisch zu beiden Seiten des Zentrums 72 des Bohrwerkzeugs erstrecken. Die Stirnfläche 21 ist generell etwa konisch unter einem für Tiefbohrwerkzeuge üblichen Schneidenwinkel, der meist zwischen 20 und 45°, gemessen gegenüber einer Ebene, auf der die Bohrerachse 56 senkrecht steht. Dies ist der Winkel, den die Schneiden einnehmen. In Sonderfällen kann der Schneidenwinkel auch 0° betragen, z.B. zur Erzeugung eines flachen Bohrungsgrundes in einem Sackloch. Der übrige Teil der Stirnfläche ist demgegenüber zur Schaffung eines Freiwinkels etwas zurückversetzt. Im Außenbereich sind die Schneiden 71 von einer axial verlaufenden Kante begrenzt, während sie im Mittelbereich, wo der Bohrer wegen geringerer Umfangsgeschwindigkeiten "drückt", dachförmig ist.

In Arbeitsdrehrichtung 73 gesehen vor den Schneiden 71 bildet sich jeweils ein Spanraum 74, der jeweils von einer der beiden Schneiden 71, einer Seitenwand 75 und der strichliert angedeuteten Wandung 76 der bearbeiteten Bohrung begrenzt wird. Die Seitenwand, die also von der Schneide bis an die Bohrungswand 76 reicht, ist gerundet ausgeführt, wobei sie bis an eine senkrechte Querebene 77 durch das Bohrerzentrum 72 reicht. Der sich bildende Spanraum 74 hat also die Größe fast eines Viertels des Querschnitts, wobei die Ecken dieses Sektors großzügig ausgerundet sind. Bei Fig. 11 ist die Seitenwand praktisch ein Halbkreis um einen ziemlich mittig in dem Spanraum liegenden Mittelpunkt. Dadurch bildet sich im Bereich des Zentrums ein zwar schmaler, jedoch durch die großzügige Ausrundung sehr tragfähiger Mittelsteg 78, der schräg von den beiden Schneiden überquert wird. Andererseits bildet die gerundete Seitenwand einen bogenförmig dreieckigen Vorsprung 79, den man auch als einen Zwickel bezeichnen könnte, der die stehen gebliebene Umfangslinie des Schneidkopfes in Richtung auf den Spanraum hin verlängert. In diesem Bereich und noch etwas über die Mittelebene 77 hinweg, ist eine Führungszone 80 ausgebildet, und zwar durch eine weitgehend genau dem gewünschten Bohrungsdurchmesser entsprechende Umfangslinie, die auf den Bereich der Führungszone und der Schneidenenden begrenzt ist, während der Schneidkopfumfang im übrigen Bereich demgegenüber um einen geringen Betrag (hundertstel bis zehntel Millimeter) zurückversetzt ist.

Im Bereich der zwischen den Spanräumen 74 "stehengebliebenen" Stirnfläche 21 sind die Mündungen 34 der Kanäle 19, 20 vorgesehen, die also Kühl-Schmierstoff kurz hinter der jeweils vorauslaufenden Schneide austreten lassen, das danach in den Spanraum 74 eintritt und die dort von der Schneide 71 erzeugten Späne durch die sich anschließenden Ableitungskanäle 35, 36 mitnimmt.

Die Ableitungskanäle sind aus Fig. 12 zu erkennen, die einen Querschnitt durch den Schaft 32 zeigt. Es ist zu erkennen, dass die Ableitungskanäle, ebenso wie die Zuleitungskanäle, im Schaftbereich die gleiche Form und Anordnung haben wie im Bereich des Schneidkopfes.

Der Vorteil der abgerundeten Form des Spanraumes 74 und der Ableitungskanäle 35, 36 ist, dass die sich insbesondere bei sehr zähen und daher langspanigen Werkstoffen bildenden Spanwendel durch die Rundung keinen Angriffspunkt finden, wo sie sich festsetzen können. Sie können vielmehr in den nahezu eine Kreisform bildenden Span- und Ableitungsraum als Wendel bis zum Ausgang in der Nähe des Einspannkopfes hindurchlaufen.

Fig. 13 zeigt eine Ansicht entsprechend Fig. 11, für die alle Merkmale der Fig. 11 gelten mit Ausnahme der Form der gerundeten Seitenwand 75. Diese ist, statt wie in Fig. 11 nahezu ein Halbkreis zu sein, hier als halbes Flachoval ausgebildet. An die Schneide 71 schließt sich nahe dem Zentrum ein Radius 81 an, der kleiner ist als der aus Fig. 11. Dadurch wird der Steg 78 auch schmaler als dort. Nach einem kurzen geraden Zwischenstück 82 schließt sich dann ein etwas größerer Radius 83 an, der auch einen Vorsprung 79 bildet, der jedoch etwas kleiner ist als in Fig. 11. Auch hier ist der Spanraum 74 gut gerundet und groß genug, um von der Schneide erzeugte Späne verstopfungsfrei abzuführen.

Fig. 14 zeigt eine Ausführung, die im unteren rechten Teil der nach Fig. 13 gleicht, während der obere linke Teil eine bezüglich der Schneidenform geänderte Struktur hat.

Die Schneide 71 a hat dort, in einigem Abstand von dem Zentrum 72, einen Knick 84 (in Betrachtung auf die Stirnseite, also nach Fig. 14). Bezogen auf die Arbeits-Drehrichtung 73 dieses Werkzeugs (im Uhrzeigersinn) ist der äußere Teil 85 der Schneide nach hinten abgekippt, so dass die Verlängerung der Schneide nicht mehr nahe dem Zentrum, sondern etwas oberhalb dessen vorbeiläuft. Da die an die Schneide in Axialrichtung angrenzende Wandung der Spankammer 74 sich der Schneidenform anpasst, also dort auch "weggeschnitten" ist, öffnet sich die Spankammer nach dieser Seite noch weiter. Die Nebenschneide kann vorzugsweise ein bis zwei Viertel der Gesamtlänge der Schneide 71 a (Radius des Schneidkopfes), insbesondere etwa die Hälfte, einnehmen.

Durch diese Ausführung werden zwei Vorteile erreicht: Zum einen wird durch die geknickte Form der Schneide der Span in Längsrichtung gebrochen, d.h. es entstehen zwei schmalere Späne, die, auch wegen der durch den Knick wirkenden Querkräfte, leichter zerreißen. Zum anderen wird durch die Tatsache, dass die eine Schneide gerade ist und die andere geknickt, eine gewisse Querkraft erzeugt, die, je nach den Verhältnissen, eine der beiden Führungsflächen 80 an die Bohrungswand 76 anpreßt, ohne dass neutrale Zwischenphasen entstehen, in denen das Werkzeug "unruhig" werden könnte. Im übrigen ist die Seitenwand 75 in dem oberen linken Bereich entsprechend der Fig. 11 ausgeführt.

Figuren 15 und 16 zeigen eine Ausführung, bei der beide Schneiden 71 a mit einem Knick 84 entsprechend Fig. 14 oben links ausgeführt sind. Hier wird also auf beiden Seiten sehr großer offener Spanraum 74 gebildet und auf beiden Seiten werden die Späne in der oben beschriebenen Art schmal und kurz gehalten.

Aus Fig. 16 ist zu ersehen, dass trotz des Knicks die Seitenansicht des Schneidkopfes 31 im wesentlichen dachförmig, die Grundform der Stirnfläche 21 also kegelförmig ist. Wegen der genauen Gestaltung und Bemessung, insbesondere der Schneiden, Span- und Ableitungskanäle und -räume, wird ausdrücklich auf die Zeichnungen Bezug genommen.

### Funktion

Ausgehend von Fig. 1 wird die in eine Bohrspindel 15 eingespannte Bohreinrichtung an ein Werkstück angesetzt und die Bohrspindel durch einen nicht dargestellten Motor drehend angetrieben. Ferner wird der Motor 27 in Gang gesetzt, so dass er Kühl-Schmierstoff über die Zuleitungen 23, 24 in die Bohreinrichtung drückt und damit durch die Axialkanäle 19, 20 sowie zu den Mündungen 34 in dem Schneidkopf hinaus. Der Bohrer, der normalerweise an seinem werkstücknahen Ende in einer Bohrbuchse geführt ist, wird dann an das Werkstück herangefahren, in den der Spindelkasten 14 auf der Schlittenführung 13 durch einen Zustellantrieb herangefahren wird. Die beiden Schneiden arbeiten sich in das Werkstück hinein und zerspanen dieses. Die Späne werden durch den Kühl-Schmierstoff durch die Spanräume 74 und die Ableitungskanäle 35, 36 im Schaft 32 mitgenommen und kurz vor dem Ende des Bohrers, d.h. vor dem Einspannkopf, ausgetragen. Dazu weist die Bohreinrichtung einen nicht dargestellten Spänekasten auf. Dort wird auch der Kühl-Schmierstoff wieder aufgefangen, um ggf. aufgearbeitet in den Behälter 29 zurückgeführt zu werden.

Normalerweise ist der Gegendruck in beiden Zuleitungskanälen 19, 20 gleich, so dass auch ohne die getrennte Versorgung über die beiden Pumpen 25, 26 Druck und Volumen in beiden Kanälen gleich wären. Wenn aber eine Verstopfung oder ein anderes Hindernis, insbesondere in dem Spanraum oder den Ableitungskanälen, auftritt, dann steigt der Druck in dieser Zone an. Infolge der unabhängigen, im wesentlichen volumenkonstanten Versorgung mit Kühl-Schmierstoff in jedem einzelnen Kanal wird dann aber in dem verstopften Kanal statt einer Absenkung der Durchflussmenge der Druck erheblich erhöht, bis die Verstopfung freigespült wurde.

Bei der Ausführung nach Fig. 10 mit Mengenteiler kommt die Bohreinrichtung mit einer Pumpe und einer Zuleitung 63 aus. Die beiden voneinander unabhängigen im wesentlichen gleichen Volumenströme mit ggf. unterschiedlichem Druckniveau werden durch den Mengenteiler in der zu Fig. 10 bereits beschriebenen Weise erzeugt.

Die Figuren 11 bis 16 zeigen, dass durch die gerundeten Seitenwände 75 bzw. 81, 82, 83 der Spanräume 74 und die in jedem Falle vorzugsweise gleich ausgestalteten Ableitungskanäle 35, 36 im Schaft 32 die Verstopfungsgefahr relativ gering ist, was noch durch die geknickte Schneide 71 a verbessert wird. Diese bewirkt, dass der geschnittene Span praktisch in der Mitte längs auseinandergebrochen wird. Mit den Bohrwerkzeugen ist eine Hochleistungs-Arbeitsweise auch bei anderenfalls schwierig zu bohrendem langspanigem Material möglich.

## Patentansprüche

1. Bohreinrichtung mit einem mehrschneidigen Bohrwerkzeug (17), insbesondere Tiefbohrwerkzeug, mit wenigstens zwei Zuleitungskanälen (19, 20), über die der Schneidzone (18) Kühl-Schmierstoff (28) zugeleitet wird, und Ableitungskanälen (35, 36), über die der Kühl-Schmierstoff und Späne abgeführt werden, **dadurch gekennzeichnet, dass** den Zuleitungskanälen (19, 20) voneinander unabhängige Kühl-Schmierstoff-Versorgungseinrichtungen (25, 26; 64) zugeordnet sind.

2. Bohreinrichtung nach Anspruch 1, **dadurch gekennzeichnet, dass** die Versorgungseinrichtung (25, 16; 64) zur Aufrechterhaltung vorgegebener gesonderter Volumenströme des Kühl-Schmierstoffs (28) für die einzelnen Zuleitungskanäle (19, 20) ausgebildet sind.

3. Bohreinrichtung nach Anspruch 1 oder 2, **dadurch gekennzeichnet, dass** die Versorgungseinrichtungen (25, 26; 64) zur Erhöhung des Kühl-Schmierstoff-Drucks bei durch Verstopfung in einem der Zuleitungskanäle (19, 20) bedingter Verringerung des Volumenstroms in diesem Kanal ausgebildet sind.

4. Bohreinrichtung nach einem der vorhergehenden Ansprüche, **dadurch gekennzeichnet, dass** an die Zuleitungskanäle (19, 20) jeweils eigene Pumpen (25, 26) bzw. Pumpenkammern angeschlossen sind.

5. Bohreinrichtung nach einem der vorhergehenden Ansprüche, **dadurch gekennzeichnet, dass** die Zuleitungskanäle (19, 20) an Ausgänge eines Mengenteilers (64) angeschlossen sind.

6. Bohreinrichtung nach einem der vorhergehenden Ansprüche, **dadurch gekennzeichnet, dass** die Zuleitungskanäle (19, 20) an eine Kühl-Schmierstoff-Einspeisung (23, 24) angeschlossen sind, die in einer Bohrspindel (15) oder einem ggf. einen Mengenteiler (64) enthaltenden Adapter (30, 30a) angeordnet ist, der ggf. das Spannfutter (16) für das Bohrwerkzeug (17) enthält.

7. Bohreinrichtung nach einem der vorhergehenden Ansprüche, **gekennzeichnet durch** eine Drehdurchführung (22) für den Kühl-Schmierstoff (28).

8. Bohreinrichtung nach einem der vorhergehenden Ansprüche, **dadurch gekennzeichnet, dass** die Einleitung des Kühl-Schmierstoffs (28) in das Bohrwerkzeug (17) bzw. die Bohrspindel (15) radial, axial oder radial und axial erfolgt.

9. Bohreinrichtung, nach einem der vorhergehenden Ansprüche, **dadurch gekennzeichnet, dass** in einer Arbeits-Drehrichtung (73) des mehrschneidigen Bohrwerkzeuges (17) vor den Schneiden (71) gebildete, mit Span-Ableitungskanälen (35, 36) verbundene Spanräume (74) im Querschnitt eine an die Schneide (71) anschließende gerundete Seitenwand (75) aufweisen.

10. Bohreinrichtung nach Anspruch 9, **dadurch gekennzeichnet, dass** die Span-Ableitungskanäle (35, 36) ebenfalls eine gerundete Seitenwand (75) aufweisen.

11. Bohreinrichtung nach Anspruch 9 oder 10, **dadurch gekennzeichnet, dass** die gerundete Seitenwand (75) bis etwa an eine zur Schneide (71) senkrechte Mittelebene (77) des Bohrwerkzeuges (17) reicht.

12. Bohreinrichtung nach einem der vorhergehenden Ansprüche, **dadurch gekennzeichnet, dass** die gerundete Seitenwand (75) im Bereich des Bohrwerkzeug-Außendurchmessers einen im wesentlichen in Umfangsrichtung gerichteten, in den Spanraum (74) ragenden Vorsprung (79) abgrenzt, an dessen Außenseite vorzugsweise eine Führungszone (80) für das Bohrwerkzeug ausgebildet ist.

13. Bohreinrichtung nach einem der Ansprüche 9 bis 12, **dadurch gekennzeichnet, dass** die gerundete Seitenwand (75) die Querschnittsform eines Halbkreises bzw. eines halben Langovals hat.

14. Bohreinrichtung, nach einem der vorhergehenden Ansprüche, **dadurch gekennzeichnet, dass** bei dem mehrschneidigen Bohrwerkzeug (19) wenigstens eine der Schneiden (71a), in axialer Draufsicht auf die Bohrwerkzeug-Stirnfläche (21) gesehen, einen Knick (84) aufweist, in dem sich zwei Schneidenabschnitte (71, 85) unter einem Winkel treffen, vorzugsweise unter einem Winkel zwischen 170° und 120°.

15. Bohreinrichtung nach einem der Ansprüche 9 bis 14, **dadurch gekennzeichnet, dass** der Spanraum (74) entsprechend der Seitenwand- und/oder Schneidenrichtung geformt ist.

16. Bohreinrichtung nach einem der Ansprüche 9 bis 15, **dadurch gekennzeichnet, dass** das Bohrwerkzeug (17) einen Schneidkopf (31) und einen daran angesetzten Schaft (32) aufweist, wobei der Schaft (32) Spanableitungskanäle (35, 36) bildende Ausnehmungen hat, die in ihrer Querschnittsform den Spanräumen (74) entsprechen.

17. Bohreinrichtung nach einem der vorhergehenden Ansprüche, **gekennzeichnet durch** einen Adapter (30, 30a) mit voneinander unabhängigen Kühl-Schmierstoff-Einspeisungen in zwei gesonderte Zuleitungskanäle (19, 20) im Bohrwerkzeug (17).

18. Bohreinrichtung nach Anspruch 17, **dadurch gekennzeichnet, dass** in dem Adapter (30a) ein Mengenteiler (64) vorgesehen ist.

19. Bohreinrichtung nach einem der Ansprüche 17 und 18, **dadurch gekennzeichnet, dass** der Adapter (30, 30a) ein Spannfutter für das Bohrwerkzeug (17) enthält.

20. Bohreinrichtung nach einem der vorhergehenden Ansprüche, **dadurch gekennzeichnet, dass** eine Bohrspindel (15) in einem Spindelkasten (14) gelagert ist und eine für zwei Zuleitungskanäle (19, 20) gesonderte Kühl-Schmierstoff-Einspeisung in die Bohrspindel (15) vorzugsweise am vom Bohrwerkzeug (17) entfernten Ende der Bohrspindel (15) vorgesehen ist.

## Claims

1. Drilling device with a multiblade drilling tool (17), particularly a deep drilling tool, with at least two supply channels (19, 20) by means of which cooling lubricant (28) is supplied to the cutting zone (18), as well as removal channels (35, 36) by means of which the cooling lubricant and chips are removed, **characterized in that** with the supply channels (19, 20) are associated mutually independent cooling lubricant supply devices (25, 26; 64).

2. Drilling device according to claim 1, **characterized in that** the supply devices (25, 26; 64) are constructed for maintaining predetermined, separate volume flows of the cooling lubricant (28) for the individual supply channels (19, 20).

3. Drilling device according to claim 1 or 2, **characterized in that** the supply devices (25, 26; 64) are constructed for increasing the cooling lubricant pressure in the case of a reduction of the volume flow in one of the supply channels (19, 20) as a result of a blockage.

4. Drilling device according to one of the preceding claims, **characterized in that** independent pumps (25, 26) or pump chambers are connected to the supply channels (19, 20).

5. Drilling device according to one of the preceding claims, **characterized in that** the supply channels (19, 20) are connected to the outlets of a quantity divider (64).

6. Drilling device according to one of the preceding claims, **characterized in that** the supply channels (19, 20) are connected to a cooling lubricant supply (23, 24), which is located in a drilling spindle (15) or an adapter (30, 30a), optionally containing a quantity divider (64) and which optionally contains the chuck (16) for the drilling tool (17).

7. Drilling device according to one of the preceding claims, **characterized by** a rotary duct (22) for the cooling lubricant (28).

8. Drilling device according to one of the preceding claims, **characterized in that** the introduction of the cooling lubricant (28) into the drilling tool (17) or drilling spindle (15) takes place radially, axially or both radially and axially.

9. Drilling device according to one of the preceding claims, **characterized in that** chipping spaces (74) formed in a working rotation direction (73) of said multiblade drilling tool (17), upstream of the blades (71) and connected to chip removal channels (35, 36), in cross-section have a rounded side wall (75) following on to the blade (71).

10. Drilling device according to claim 9, **characterized in that** the chip removal channels (35, 36) also have a rounded side wall (75).

11. Drilling device according to claim 9 or 10, **characterized in that** the rounded side wall (75) extends approximately up to a drilling tool centre plane (77) perpendicular to the blade (71).

12. Drilling device according to one of the preceding claims, **characterized in that**, in the vicinity of the drilling tool external diameter, the rounded side wall (75) bounds a substantially circumferentially directed projection (79) projecting into the chipping space (74) and on whose outside is preferably formed a guide zone (80) for the drilling tool.

13. Drilling device according to one of the claims 9 to 12, **characterized in that** the rounded side wall (75) has the cross-sectional shape of a semicircle or half a long oval.

14. Drilling device according to one of the preceding claims, **characterized in that** in the case of a multiblade drilling tool (19), at least one of the blades (71 a), considered in an axial plan view on the drilling tool end face (21), has a bend (84), where two blade sections (71, 85) meet under an angle, preferably an angle between 170° and 120°.

15. Drilling device according to one of the claims 9 to 14, **characterized in that** the chipping space (74) is shaped in accordance with the side wall and/or blade direction.

16. Drilling device according to one of the claims 9 to 15, **characterized in that** the drilling tool (17) has a cutting head (31) and a shank (32) applied thereto, the shank (32) having recesses forming chip removal channels (35, 36) and the cross-sectional shape thereof corresponds to the chipping spaces (74).

17. Drilling device according to one of the preceding claims, **characterized by** an adapter (30, 30a) with mutually independent cooling lubricant feeds into two separate supply channels (19, 20) in said drilling tool (17).

18. Drilling device according to claim 17, **characterized in that** a quantity divider (64) is provided in said adapter (30a).

19. Drilling device according to one of the claims 17 and 18, **characterized in that** the adapter (30, 30a) contains a chuck for the drilling tool (17).

20. Drilling device according to one of the preceding claims, **characterized in that** a drilling spindle (15) is supported in a headstock (14) and there is a separate cooling lubricant feed for two supply channels (19, 20) into said drilling spindle (15), preferably at the end of the drilling spindle (15) remote from the drilling tool (17).

## Revendications

1. Dispositif de perçage avec un outil de perçage (17) à plusieurs tranchants, notamment outil de perçage profond, avec au moins deux conduits d'amenée (19, 20), par lesquels on amène un réfrigérant lubrifiant (28) à la zone de coupe (18), et des conduits d'évacuation (35, 36) par lesquels on peut évacuer le réfrigérant lubrifiant et les copeaux, **caractérisé en ce qu'**on associe aux conduits d'amenée (19, 20) des dispositifs d'alimentation en réfrigérant lubrifiant (25, 26 ; 64) indépendants les uns des autres.

2. Dispositif de perçage d'après la revendication 1, **caractérisé en ce que** le dispositif d'alimentation (25, 16 ; 64) est réalisé pour le maintien de débits volumétriques distincts et prédéterminés de réfrigérant lubrifiant (28) pour les conduits d'amenée (19, 20) individuels.

3. Dispositif de perçage d'après la revendication 1 ou 2, **caractérisé en ce que** les dispositifs d'alimentation (25, 26 ; 64) sont réalisés de manière à augmenter la pression du réfrigérant lubrifiant dans un des conduits d'amenée (19, 20) quand le débit volumétrique s'amoindrit à cause d'une obstruction dans un des ces conduits.

4. Dispositif de perçage d'après une des revendications précédentes, **caractérisé en ce que** des pompes (25, 26) ou encore des chambres à pompe individuelles sont respectivement raccordées aux conduits d'amenée (19, 20).

5. Dispositif de perçage d'après une des revendications précédentes, **caractérisé en ce que** les conduits d'amenée (19, 20) sont raccordés à des sorties d'un diviseur de débit (64).

6. Dispositif de perçage d'après une des revendications précédentes, **caractérisé en ce que** les conduits d'amenée (19, 20) sont raccordés à une entrée de réfrigérant lubrifiant (23, 24), qui est disposée dans une broche de perçage (15) ou dans un adaptateur (30, 30a) qui contient éventuellement un diviseur de débit (64) et qui contient éventuellement le mandrin de serrage (16) pour l'outil de perçage (17).

7. Dispositif de perçage d'après une des revendications précédentes, **caractérisé par** un dispositif rotatif de traversée (22) pour le réfrigérant lubrifiant (28).

8. Dispositif de perçage d'après une des revendications précédentes, **caractérisé en ce que** l'intromission du réfrigérant lubrifiant (28) dans l'outil de perçage (17) ou encore dans la broche de perçage (15) a lieu radialement, axialement ou radialement et axialement.

9. Dispositif de perçage d'après une des revendications précédentes, **caractérisé en ce que** dans un sens de rotation de service (73) de l'outil de perçage (17) à plusieurs tranchants, des logements de copeaux (74) formés devant les tranchants (71) et raccordés à des conduits d'évacuation de copeaux (35, 36), présentent en section transversale une paroi latérale arrondie (75) qui fait suite au tranchant (71).

10. Dispositif de perçage d'après la revendication 9, **caractérisé en ce que** les conduits d'évacuation de copeaux (35, 36) présentent également une paroi latérale arrondie (75).

11. Dispositif de perçage d'après la revendication 9 ou 10, **caractérisé en ce que** la paroi latérale arrondie (75) s'étend à peu près jusqu'à un plan médian (77) de l'outil de perçage (17) qui est orthogonal par rapport au tranchant (71).

12. Dispositif de perçage d'après une des revendications précédentes, **caractérisé en ce que** la paroi latérale arrondie (75) délimite dans le domaine du diamètre extérieur de l'outil de perçage une saillie (79) qui est orientée essentiellement en direction de circonférence et qui saille dans le logement de copeaux (74) et à la face extérieure de laquelle est réalisée de préférence une zone de guidage (80) pour l'outil de perçage.

13. Dispositif de perçage d'après une des revendications de 9 à 12, **caractérisé en ce que** la paroi latérale arrondie (75) présente une forme en section transversale qui correspond à un demi-cercle ou encore à la moitié d'un ovale oblong.

14. Dispositif de perçage d'après une des revendications précédentes, **caractérisé en ce que** pour l'outil de perçage (19) à plusieurs tranchants au moins un des tranchants (71 a) présente dans une vue d'en haut axiale sur la surface frontale d'outil de perçage (21) un coude (84) où deux sections de tranchant (71, 85) se rencontrent sous un certain angle, de préférence sous un angle d'une valeur entre 170° et 120°.

15. Dispositif de perçage d'après une des revendications de 9 à 14, **caractérisé en ce que** la forme du logement de copeaux (74) suit la forme de la paroi latérale et/ou de la direction du tranchant.

16. Dispositif de perçage d'après une des revendications de 9 à 15, **caractérisé en ce que** l'outil de perçage (17) présente une tête de coupe (31) et une tige (32) qui y est appliquée, sachant que la tige (32) présente des creux qui forment des conduits d'évacuation de copeaux (35, 36), dont la forme en section transversale correspond à celle des logements de copeaux (74).

17. Dispositif de perçage d'après une des revendications précédentes, **caractérisé par** un adaptateur (30, 30a) présentant des entrées de réfrigérant lubrifiant indépendantes l'une de l'autre dans deux conduits d'amenée (19, 20) distincts à l'intérieur de l'outil de perçage (17).

18. Dispositif de perçage d'après la revendication 17, **caractérisé en ce qu'**on prévoit un diviseur de débit (64) à l'intérieur de l'adaptateur (30a).

19. Dispositif de perçage d'après une des revendications 17 et 18, **caractérisé en ce que** l'adaptateur (30, 30a) contient un mandrin de serrage pour l'outil de perçage (17).

20. Dispositif de perçage d'après une des revendications précédentes, **caractérisé en ce qu'**une broche de perçage (15) est logée dans une tête porte broche (14) et qu'une entrée de réfrigérant lubrifiant distincte dans la broche de perçage (15) pour deux conduits d'amenée (19, 20) est prévue de préférence à l'extrémité éloignée de l'outil de perçage (17) de la broche de perçage (15).
